# EUROPEAN PATENT SPECIFICATION

(11) **EP 2 995 717 B1**
(45) Date of publication and mention of the grant of the patent: **11.07.2018**
(21) Application number: 13851990.5
(22) Date of filing: 10.05.2013
(51) Int. Cl.: C03C 25/48, D03D 1/00, D06M 11/46, D06M 11/48, D03D 15/12, D06M 11/36

(54) **RESIN-COATED FIRE-RESISTANT FIBRE THREAD, AND RESIN-COATED FIRE-RESISTANT WOVEN FABRIC USING SAME**
FEUERBESTÄNDIGES HARZBESCHICHTETES FASERGARN UND FEUERFESTES HARZBESCHICHTETES GEWEBE DAMIT
FIL DE FIBRES RÉSISTANT AU FEU ENDUIT DE RÉSINE ET TISSU TISSÉ ENDUIT DE RÉSINE RÉSISTANT AU FEU UTILISANT CE FIL

(43) Date of publication of application: 16.03.2016
(73) Proprietor: Nitto Boseki Co., Ltd, Fukushima-shi, Fukushima 960-8161 (JP)
(72) Inventor: HIBI, Sousuke, Fukushima-shi Fukushima 960-8161 (JP); SEKIKAWA, Hironobu, Fukushima-shi Fukushima 960-8161 (JP); OKADO, Saori, Fukushima-shi Fukushima 960-8161 (JP)
(74) Representative: Schön, Christoph
(86) International application number: PCT/JP2013/063198
(87) International publication number: WO 2014/069025

(56) References cited:
- WO-A1-00/37362
- WO-A1-2012/075369
- JP-A- 2006 233 139
- JP-A- 2008 068 482
- JP-A- 2009 279 814
- JP-A- 2011 052 357
- JP-A- 2011 052 357
- JP-A- 2011 093 280

## Description

### Technical Field

The present invention relates to resin-coated flame-retardant fiber yarn and a resin-coated flame-retardant fiber woven fabric using the same.

### Background Art

Resin-coated flame-retardant fiber woven fabrics have been known as membrane materials used for tent warehouses, medium- or large-sized tents, truck hoods, sunshade tents and the like, and as blinds. The resin-coated flame-retardant fiber woven fabrics are obtained by weaving resin-coated flame-retardant fiber yarn and, for example, resin-coated glass fiber woven fabrics formed by weaving resin-coated glass fiber bundles have been known.

A known example of the resin-coated glass fiber bundle is those which comprise a first resin coating layer coating a glass fiber bundle and second resin coating layer formed on the first resin coating layer and are colored wholly or partially along the longitudinal direction of the glass fiber bundle with a pigment contained in the second resin coating layer (for example, see Patent Literature 1).

There has existed a problem that the conventional resin-coated glass fiber woven fabrics formed by weaving the resin-coated glass fiber bundles cannot have sufficient thermal insulation in use for heat resistant blinds due to low thermal insulation of the second resin coating layer.

On the other hand, a membrane material comprising a resin layer which coats a base fabric and contains titanium dioxide particles having a weight average particle diameter of 0.6-1.5 µm and mica particles has been known (for example, see Patent Literature 2). With respect to the membrane material, it is said that a glass fiber woven fabric can be used as the base fabric and that excellent thermal insulation can be attained.

In addition, a synthetic resin sheet has been known which is intended to have thermal insulation by incorporating two types of titanium dioxide particles having different particle diameters from each other (for example, see Patent Literature 3).

### Citation List

### Patent Literature

Patent Literature 1: Japanese Patent Laid-Open No. 2007-70749
Patent Literature 2: Japanese Patent Laid-Open No. 2009-279814
Patent Literature 3: Japanese Patent Laid-Open No. 2006-233139

WO 2012/075369 A1 discloses compositions that can be used in forming products with increased near infrared (IR) reflective capability. A composition can include IR reflective and/or IR transmissive non-white pigments and can be formed with suitable viscosity so as to successfully coat substrates, e.g., yarns, suitable for use in forming coverings for architectural openings, e.g., window coverings. Also disclosed are textile substrates coated with the compositions, including textile substrates coated with compositions that include abrasive, inorganic IR reflective dark pigments.

JP 2011-093280 A discloses near infrared ray shielding sheet which has a sea-island structure consisting of an immiscible mixture by synthetic resin blend, and which is a flexible sheet including a near infrared ray shielding layer in which any one of the sea component or island component contains tungsten oxide fine particles and/or composite tungsten oxide fine particles in the sea-island structure. The sea-island structure is composed of a synthetic resin immiscible pair, the one composing the synthetic resin immiscible pair is composed of the synthetic resin containing tungsten oxide fine particles and/or composite tungsten oxide fine particles, and the tungsten fine particle-containing synthetic resin is mixed with the other synthetic resin composing the synthetic resin immiscible pair, to include the tungsten fine particles into any one of the sea component or island component.

WO 00/37362 A1 discloses bismuth manganese oxide pigments which are used as additives to various materials such as plastics, plastic or organic coating compositions, glass and ceramic coating compositions, and the like. The bismuth manganese oxide pigments preferably comprise Bi₂Mn₄O₁₀ crystallized in the orthorhombic crystal structure and having a very low a*- and b*- color value (CIELAB). Other preferred bismuth manganese pigments are green colored and comprise Bi₁₂MnO₂, crystallized in a cubic crystal structure. The pigments possess improved reflectance characteristics, particulary in the IR region, and may reduce IR-induced heat buildup.

JP 2011-052 357 A discloses heat-insulating lighting film material which is a flexible material including a fiber base cloth and a flexible resin coating layer formed on at least one surface of the cloth and has a light transmittance (measured by JIS Z8722.5.4 (condition g)) of 3-70%, wherein at least one layer of the flexible resin coating layer has a sea-island structure comprising an incompatible mixture formed by synthetic resin blend, and either one of the sea component and the island component of the sea-island structure contains a thermally controllable coloring agent.

### Summary of Invention

### Technical Problem

Thus, it is considered to add the two types of titanium dioxide particles having different particle diameters from each other in a certain mass ratio in the resin coating layer in the resin-coated flame-retardant fiber yarn such as the resin-coated glass fiber bundle described above. In this case, titanium dioxide particles having a function to effectively shield infrared rays in the incident light are used as the first particles having a relatively larger particle diameter and those having a function to effectively scatter visible rays in the incident light are used as the second particles having a relatively smaller particle diameter.

When the first particles and the second particles are used in a certain mass ratio in this manner, excellent translucency as well as excellent thermal insulation can be attained in the resin-coated flame-retardant fiber woven fabric obtained by weaving the resin-coated flame-retardant fiber yarn used as the warp and woof.

Since the resin-coated flame-retardant fiber woven fabric contains a large amount of titanium dioxide, however, there exist inconveniences that the woven fabric gives a dazzling impression due to a high whiteness when it is new and, on the other hand, that dirt and yellowing by degradation due to aging tend to become conspicuous so as to deteriorate appearance thereof depending on an installation environment.

An object of the present invention is to provide resin-coated flame-retardant fiber yarn capable of solving such inconveniences so that a resin-coated flame-retardant fiber woven fabric formed by weaving the yarn can have excellent thermal insulation as well as a quiet color tone and maintain a fine appearance thereof for a long period of time.

### Solution to Problem

In order to achieve such a purpose, the present invention is a resin-coated flame-retardant fiber yarn comprising a resin coating layer coating a flame-retardant fiber yarn,
wherein the resin coating layer comprises first titanium dioxide particles (A) having a number average particle diameter in a range of 0.6 to 1.5 µm, second titanium dioxide particles (C) having a number average particle diameter in a range of 0.2 to 0.4 µm, and bismuth-manganese composite metal oxide particles (B),
wherein a total content of the first titanium dioxide particles and the bismuth-manganese composite metal oxide particles (A+B) is in a range of 1.5 to 13.0 mass% based on a total mass of the resin-coated flame-retardant fiber yarn, and
wherein a mass ratio value of the first titanium dioxide particles to the bismuth-manganese composite metal oxide particles (A/B) is in a range of 5 to 70, and
wherein a total content of the first titanium dioxide particles, the bismuth-manganese composite metal oxide particles and the second titanium dioxide particles (A+B+C) is in a range of 4.5 to 13.2 mass% based on the total mass of the resin-coated flame-retardant fiber yarn.

The first titanium dioxide particles have a function to efficiently shield infrared rays in the incident light due to the number average particle diameter thereof in a range of 0.6-1.5 µm. The composite metal oxide described above is generally used as a coloring pigment in dark color paint. The coloring pigment is described, for example, in Japanese Patent Laid-Open No. 2010-174175.

Accordingly, the resin-coated flame-retardant fiber woven fabric formed by weaving the resin-coated flame-retardant fiber yarn of the present invention can have excellent thermal insulation as well as a moderately dark and quiet color tone, and thus can maintain a fine appearance thereof for a long period of time, since the total content of the first titanium dioxide particles and the composite metal oxide particles (A+B) is in the range described above based on the total mass of the resin-coated flame-retardant fiber yarn and the mass ratio value of the first titanium dioxide particles to the composite metal oxide particles (A/B) is in the range described above in the resin-coated flame-retardant fiber yarn.

When the first titanium dioxide particles have a number average particle diameter of less than 0.6 µm or more than 1.5 µm, the particles cannot have a function to shield infrared rays in the incident light, and thus the resin-coated flame-retardant fiber woven fabric formed by weaving the resin-coated flame-retardant fiber yarn of the present invention cannot have thermal insulation.

When the total content of the first titanium dioxide particles and the composite metal oxide particles (A+B) is less than 1.5 mass% based on the total mass of the resin-coated flame-retardant fiber yarn, the resin-coated flame-retardant fiber woven fabric formed by weaving the resin-coated flame-retardant fiber yarn of the present invention cannot have thermal insulation. When the total content of the first titanium dioxide particles and the composite metal oxide particles (A+B) exceeds 13.0 mass% based on the total mass of the resin-coated flame-retardant fiber yarn, on the other hand, the resin-coated flame-retardant fiber yarn of the present invention cannot be woven.

When the mass ratio value of the first titanium dioxide particles to the composite metal oxide particles (A/B) is less than 5, the resin-coated flame-retardant fiber woven fabric formed by weaving the resin-coated flame-retardant fiber yarn of the present invention cannot have thermal insulation and has a too bright color tone to maintain a fine appearance thereof for a long period of time. When the mass ratio value of the first titanium dioxide particles to the composite metal oxide particles (A/B) exceeds 70, the resin-coated flame-retardant fiber woven fabric formed by weaving the resin-coated flame-retardant fiber yarn of the present invention has an excessively dark color tone.

The total content of the first titanium dioxide particles and the composite metal oxide particles (A+B) preferably is in a range of 4.5-13.0 mass% based on the total mass of the resin-coated flame-retardant fiber yarn in the resin-coated flame-retardant fiber yarn of the present invention. This can lead to more excellent thermal insulation in the resin-coated flame-retardant fiber woven fabric formed by weaving the resin-coated flame-retardant fiber yarn of the present invention.

The mass ratio value of the first titanium dioxide particles to the composite metal oxide particles (A/B) preferably is in a range of 15-55 in the resin-coated flame-retardant fiber yarn of the present invention. This can lead to a moderately dark and quiet color tone, and thus can maintain a fine appearance thereof for a long period of time in the resin-coated flame-retardant fiber woven fabric formed by weaving the resin-coated flame-retardant fiber yarn of the present invention.

When the mass ratio value of the first titanium dioxide particles to the composite metal oxide particles (A/B) is less than 15, the resin-coated flame-retardant fiber woven fabric formed by weaving the resin-coated flame-retardant fiber yarn of the present invention may have a too bright color tone to maintain a fine appearance thereof for a long period of time. When the mass ratio value of the first titanium dioxide particles to the composite metal oxide particles (A/B) exceeds 55, on the other hand, the resin-coated flame-retardant fiber woven fabric formed by weaving the resin-coated flame-retardant fiber yarn of the present invention tend to have a darker color tone.

The resin coating layer comprises second titanium dioxide particles (C) having a number average particle diameter in a range of 0.2-0.4 µm in the resin-coated flame-retardant fiber yarn of the present invention. The second titanium dioxide particles has a function to efficiently scatter visible rays in the incident light due to the number average particle diameter thereof in a range of 0.2-0.4 µm.

Accordingly, when the resin-coated flame-retardant fiber yarn of the present invention comprises the second titanium dioxide particles together with the first titanium dioxide particles in the resin coating layer, translucency can be adjusted without lowering thermal insulation in the resin-coated flame-retardant fiber woven fabric formed by weaving the resin-coated flame-retardant fiber yarn of the present invention. When the second titanium dioxide particles have a number average particle diameter of less than 0.2 µm or more than 0.4 µm, the particles cannot have a function to efficiently scatter visible rays in the incident light.

When the resin-coated flame-retardant fiber yarn of the present invention comprises the second titanium dioxide particles, a total content of the first titanium dioxide particles, the composite metal oxide particles and second titanium dioxide particles (A+B+C) preferably is in a range of 4.5-13.1 mass% based on the total mass of the resin-coated flame-retardant fiber yarn. When the total content of the first titanium dioxide particles, the composite metal oxide particles and second titanium dioxide particles (A+B+C) is in the range described above based on the total mass of the resin-coated flame-retardant fiber yarn, the resin-coated flame-retardant fiber woven fabric formed by weaving the resin-coated flame-retardant fiber yarn of the present invention can have both excellent thermal insulation and translucency.

When the total content of the first titanium dioxide particles, the composite metal oxide particles and second titanium dioxide particles (A+B+C) is less than 4.5 mass% based on the total mass of the resin-coated flame-retardant fiber yarn, the resin-coated flame-retardant fiber woven fabric formed by weaving the resin-coated flame-retardant fiber yarn of the present invention may not have sufficient thermal insulation and translucency. When the total content of the first titanium dioxide particles, the composite metal oxide particles and second titanium dioxide particles (A+B+C) exceeds 13.1 mass% based on the total mass of the resin-coated flame-retardant fiber yarn, on the other hand, the resin-coated flame-retardant fiber yarn of the present invention may have deteriorated weaving performance.

When the resin-coated flame-retardant fiber yarn of the present invention comprises the second titanium dioxide particles, a mass ratio value of the composite metal oxide particles to the second titanium dioxide particles (B/C) preferably is in a range of 1-20. When the mass ratio value of the composite metal oxide particles to the second titanium dioxide particles (B/C) is less than 1, the resin-coated flame-retardant fiber woven fabric formed by weaving the resin-coated flame-retardant fiber yarn of the present invention may have a too bright color tone to maintain a fine appearance thereof for a long period of time. When the mass ratio value of the composite metal oxide particles to the second titanium dioxide particles (B/C) exceeds 20, on the other hand, the resin-coated flame-retardant fiber woven fabric formed by weaving the resin-coated flame-retardant fiber yarn of the present invention tends to have a darker color tone.

A resin-coated flame-retardant fiber woven fabric of the present invention is formed by weaving resin-coated flame-retardant fiber yarn of the present invention used as at least a part of the warp or woof. When the resin-coated flame-retardant fiber yarn of the present invention is used as at least a part of the warp or woof, the resin-coated flame-retardant fiber woven fabric of the present invention can have excellent thermal insulation as well as a moderately dark and quiet color tone, and thus can maintain a fine appearance thereof for a long period of time.

### Brief Description of Drawings

FIG. 1 is an illustrative cross-section view showing a constitution of a resin-coated glass fiber bundle of the present invention.
FIG. 2 is a perspective view showing a constitution of a resin-coated glass fiber woven fabric of the present invention.

### Description of Embodiments

Embodiments of the present invention will be illustrated below in more details referring to the accompanying drawings.

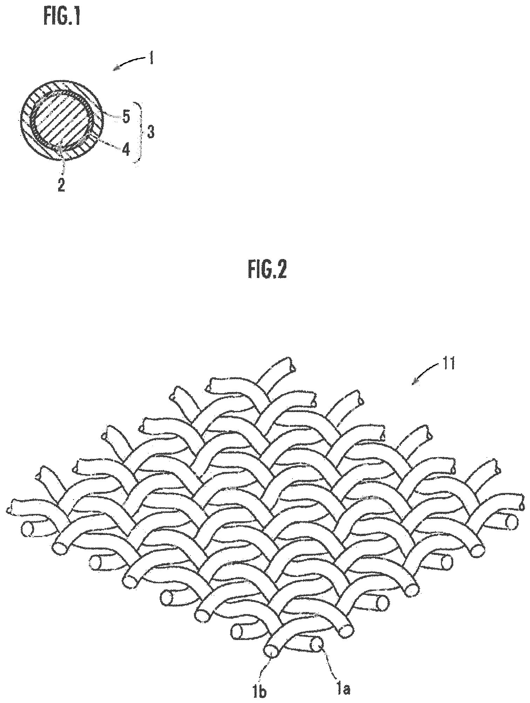

As shown in FIG. 1, resin-coated flame-retardant fiber yarn 1 of the present embodiment comprises a resin coating layer 3 coating a flame-retardant fiber yarn 2. The resin coating layer 3 comprises first titanium dioxide particles having a number average particle diameter in a range of 0.6-1.5 µm and composite metal oxide particles and further comprises second titanium dioxide particles having a number average particle diameter in a range of 0.2-0.4 µm.

As the first titanium dioxide particles, titanium dioxide particles having number average particle diameter of 0.8-1.2 µm are preferably used from the viewpoint of easy availability.

As the composite metal oxide particles, particles of at least one composite metal oxide selected from the group consisting of a bismuth-manganese composite metal oxide, can be used. As the composite metal oxide particles, bismuth-manganese composite metal oxide is used from the viewpoint of easy availability.

As shown in FIG. 2, the resin-coated flame-retardant fiber yarn 1 of the present embodiment can be woven into a resin-coated flame-retardant fiber woven fabric 11 using the resin-coated flame-retardant fiber yarn 1 as at least a part of the warp 1a or woof 1b. The resin-coated flame-retardant fiber woven fabric 11 can be suitably used for building material application such as blinds from the viewpoint of fire safety since the woven fabric 11 has flame resistance due to use of the resin-coated flame-retardant fiber yarn 1.

The resin-coated flame-retardant fiber woven fabric 11 may comprise yarns other than the resin-coated flame-retardant fiber yarns 1 in addition to the yarns 1 as a part of the warps 1a or woofs 1b as long as the other yarns do not spoil the flame retardance, flame resistance, thermal insulation and color tone of the woven fabric 11. The resin-coated flame-retardant fiber woven fabric 11 is, however, preferably woven using the resin-coated flame-retardant fiber yarn 1 for all of the warp 1a and woof 1b since the woven fabric 11 has excellent thermal insulation as well as moderately dark and quiet color tone, and thus can maintain a fine appearance thereof for a long period of time.

As the flame-retardant fiber composing the flame-retardant fiber yarn 2, inorganic fiber, which is noninflammable, or organic fiber having LOI (Limited Oxygen Index), conforming to a flame retardance test method JIS K 7201 A-1 method, of 26 or more is preferably used. The flame-retardant fiber may include glass fiber, carbon fiber, aramid fiber, polyarylate fiber, polyether ketone fiber, polyvinyl chloride fiber, polyvinylidene chloride fiber, polyimide fiber, polychlal fiber, flame-retardant nylon fiber, flame-retardant polyester fiber, flame-retardant acrylic fiber, flame-retardant polypropylene fiber, flame-retardant polyethylene fiber, flame-retardant polylactic acid fiber, flame-retardant rayon fiber, flame-retardant cotton fiber, flame-retardant wool, and the like. The flame-retardant fiber is preferably any one of glass fiber, carbon fiber or aramid fiber from the viewpoint of strength, and is particularly preferably glass fiber from the viewpoint of non-inflammability, dimensional stability due to a low linear expansion coefficient, and easy availability.

The flame-retardant fiber yarn 2 may be that mixed spun out of a plurality of the above-described flame-retardant fiber or that of which LOI is adjusted to 26 or more by mixture of the flame-retardant fiber and non-flame-retardant fiber.

When the flame-retardant fiber yarn 2 is composed of glass fiber, the flame-retardant fiber yarn 2 is preferably composed of a glass fiber bundle which has been formed by bunching 200-1600 glass filaments having a diameter of 3-9 µm and preferably has a mass of 20-70 tex. The glass fiber bundle preferably has a mass in a range of 25-45 mass% based on the total mass of the resin-coated flame-retardant fiber yarn 1 so that the yarn 1 has a combination of satisfactory mechanical strength, excellent appearance and excellent thermal insulation. The glass fiber bundle preferably has a mass in a range of 30-40 mass% based on the total mass of the resin-coated flame-retardant fiber yarn 1 in order to have a more satisfactory mechanical strength.

The glass fiber bundle is preferably that made from E-glass from the viewpoint of easy availability and, on the other hand, preferably that made from T-glass from the viewpoint of mechanical strength and dimensional stability against heat. Linear expansion coefficients are 5.6 x 10⁻⁶/K for E-glass and 2.8 x 10⁻⁶/K for T-glass, respectively, for reference.

In the resin coating layer 3 the total content of the first titanium dioxide particles (A) and the composite metal oxide particles (B), (A+B), is in a range of 1.5-13.0 mass% based on the total mass of the resin-coated flame-retardant fiber yarn 1 and the mass ratio value of the first titanium dioxide particles to the composite metal oxide particles (A/B) is in a range of 5-70. As a result, the resin-coated flame-retardant fiber woven fabric 11 formed by weaving the resin-coated flame-retardant fiber yarn 1 of the present embodiment can have excellent thermal insulation as well as a moderately dark and quiet color tone, and thus can maintain a fine appearance thereof for a long period of time, and can have excellent weaving performance.

In the resin-coated flame-retardant fiber yarn 1, the total content of the first titanium dioxide particles (A) and the composite metal oxide particles (B), (A+B), preferably is in a range of 4.5-13.0 mass% based on the total mass of the resin-coated flame-retardant fiber yarn 1 such that the resin-coated flame-retardant fiber woven fabric 11 formed by weaving the resin-coated flame-retardant fiber yarn 1 has more excellent thermal insulation. In addition, in the resin-coated flame-retardant fiber yarn 1, the total content of the first titanium dioxide particles (A) and the composite metal oxide particles (B), (A+B), preferably is in a range of 7.5-10.0 mass% based on the total mass of the resin-coated flame-retardant fiber yarn 1 such that the resin-coated flame-retardant fiber woven fabric 11 formed by weaving the resin-coated flame-retardant fiber yarn 1 attains better balance of thermal insulation and a color tone. On the other hand, in the resin-coated flame-retardant fiber yarn 1, the mass ratio value of the first titanium dioxide particles to the composite metal oxide particles (A/B) preferably is in a range of 15-55 such that the resin-coated flame-retardant fiber woven fabric 11 formed by weaving the resin-coated flame-retardant fiber yarn 1 attains a more desirable color tone.

In the resin-coated flame-retardant fiber yarn 1, it is particularly preferred that the total content of the first titanium dioxide particles (A) and the composite metal oxide particles (B), (A+B), is in a range of 4.5-13.0 mass% based on the total mass of the resin-coated flame-retardant fiber yarn 1 and the mass ratio value of the first titanium dioxide particles to the composite metal oxide particles (A/B) is in a range of 15-55 such that the resin-coated flame-retardant fiber woven fabric 11 formed by weaving the resin-coated flame-retardant fiber yarn 1 has both more excellent thermal insulation and a color tone. In the resin-coated flame-retardant fiber yarn 1, it is most preferred that the total content of the first titanium dioxide particles (A) and the composite metal oxide particles (B), (A+B), is in a range of 7.5-10.0 mass% based on the total mass of the resin-coated flame-retardant fiber yarn 1 and the mass ratio value of the first titanium dioxide particles to the composite metal oxide particles (A/B) is in a range of 15-55 such that the resin-coated flame-retardant fiber woven fabric 11 formed by weaving the resin-coated flame-retardant fiber yarn 1 has both still more excellent thermal insulation and a color tone.

Surface of the first titanium dioxide particles is preferably coated with an oxide or hydroxide of at least one metal selected from the group consisting of aluminum, silicon, zirconium and zinc. Surface-coating the first titanium dioxide particles with the oxide or hydroxide of the metal described above can inhibit photocatalytic activity of the titanium dioxide particles, thereby improving weather resistance of the resin coating layer 3 even if the resin-coated flame-retardant fiber yarn 1 and resin-coated flame-retardant fiber woven fabric 11 have the moderately dark and quiet color tone which absorb a larger amount of light compared with white-colored counterparts.

When the resin coating layer 3 contains the second titanium dioxide particles, the total content of the first titanium dioxide particles (A), the composite metal oxide particles (B) and second titanium dioxide particles (C), (A+B+C) is in a range of 4.5-13.1 mass% based on the total mass of the resin-coated flame-retardant fiber yarn 1 and the mass ratio value of the composite metal oxide particles (B) to the second titanium dioxide particles (C), (B/C) is in a range of 1-20, in addition to the conditions described above.

As a result, the resin-coated flame-retardant fiber woven fabric 11 formed by weaving the resin-coated flame-retardant fiber yarn 1 of the present embodiment can have excellent thermal insulation as well as a moderately dark and quiet color tone, and thus can maintain a fine appearance thereof for a long period of time, and can have excellent weaving performance.

In the resin-coated flame-retardant fiber yarn 1 of the present embodiment, it is preferred that the total content of the first titanium dioxide particles (A), the composite metal oxide particles (B) and second titanium dioxide particles (C), (A+B+C) is in a range of 4.5-13.1 mass% based on the total mass of the resin-coated flame-retardant fiber yarn 1, the mass ratio value of the first titanium dioxide particles to the composite metal oxide particles (A/B) is in a range of 15-55, and a mass ratio value of the composite metal oxide particles (B) to the second titanium dioxide particles (C), (B/C) is in a range of 1-20 such that the resin-coated flame-retardant fiber woven fabric 11 formed by weaving the resin-coated flame-retardant fiber yarn 1 has both more excellent thermal insulation and a color tone.

In addition, in the resin-coated flame-retardant fiber yarn 1 of the present embodiment, it is more preferred that the total content of the first titanium dioxide particles (A), the composite metal oxide particles (B) and second titanium dioxide particles (C), (A+B+C) is in a range of 7.5-10.1 mass% based on the total mass of the resin-coated flame-retardant fiber yarn 1, the mass ratio value of the first titanium dioxide particles to the composite metal oxide particles (A/B) is in a range of 15-55, and a mass ratio value of the composite metal oxide particles (B) to the second titanium dioxide particles (C), (B/C) is in a range of 1-20 such that the resin-coated flame-retardant fiber woven fabric 11 formed by weaving the resin-coated flame-retardant fiber yarn 1 has both still more excellent thermal insulation and a color tone.

Surface of the second titanium dioxide particles is preferably coated with an oxide or hydroxide of at least one metal selected from the group consisting of aluminum, silicon, zirconium and zinc. Surface-coating the second titanium dioxide particles with the oxide or hydroxide of the metal described above can inhibit photocatalytic activity of the titanium dioxide particles to improve the weather resistance of the resin coating layer 3 even when the resin-coated flame-retardant fiber yarn 1 and resin-coated flame-retardant fiber woven fabric 11 have the moderately dark and quiet color tone which absorb a larger amount of light compared with white colored counterparts.

The thermal insulation evaluated as a solar reflectance is preferably 50% or more and more preferably 55% or more. The moderately dark and quiet color tone evaluated as a lightness L* in the L*a*b* color system preferably is in a range of 50-75, more preferably 55-72.5, and particularly preferably 60-72.

Each number average particle diameter and each content of the first titanium dioxide particles, the second titanium dioxide particles and the composite metal oxide particles contained in the resin coating layer 3 can be determined by dissolving the resin coating layer 3 in various organic solvents such as tetrahydrofuran, subsequent separation of the obtained powder in solutions having varied specific gravities or selective separation of the particles of interest using an acid, base, fused alkali salt or the like, followed by measurement using a particle size distribution measuring apparatus such as that of laser diffraction type (e.g., trade name: LS 230, manufactured by Beckman Coulter Inc.). In measurement of the particle size distribution, various dispersants such as alkyltrimetylammonium bromide, sodium polymetaphosphate, or sodium pyrophosphate nonylphenyocta(ethoxy)anol may be suitably used in order to prevent aggregation of the powder.

As shown FIG. 1, the resin coating layer 3 preferably comprises a first resin coating layer 4 and a second resin coating layer 5 formed on the first resin coating layer 4. In this case, both of the first titanium dioxide particles and the composite metal oxide particles are contained in the second resin coating layer 5 and the second titanium dioxide particles, if used, are also contained in the second resin coating layer 5. The first resin coating layer 4 is arranged between the flame-retardant fiber yarn 2 and second resin coating layer 5 and has a function to enhance adhesiveness of the second resin coating layer 5 to the flame-retardant fiber yarn 2.

The second resin coating layer 5 is preferably formed with a resin composition selected from the group consisting of a vinyl chloride resin composition, vinyl chloride-vinyl acetate copolymer resin composition, ethylene-vinyl acetate copolymer composition, polyethylene resin composition and polypropylene resin composition, and is more preferably formed with a vinyl chloride resin composition because of excellent weather resistance and antifouling property thereof. The vinyl chloride resin composition comprises 30 mass% or more, preferably 40 mass% or more of a vinyl chloride resin and may comprises various additives such as plasticizers, flame retardants and surfactants in addition to the vinyl chloride resin.

The first resin coating layer 4 may be that composed of any resin as long as the resin coating layer has a function to enhance the adhesiveness of the second resin coating layer 5 to the flame-retardant fiber yarn 2, but is preferably formed with a vinyl chloride-vinyl acetate copolymer resin, when the second resin coating layer 5 is composed of a vinyl chloride resin composition, because of excellent adhesiveness thereof to the vinyl chloride resin composition. The first resin coating layer 4 preferably does not contain any of the first titanium dioxide particles, the composite metal oxide particles and the second titanium dioxide particles in order to enhance the adhesiveness thereof to the flame-retardant fiber yarn 2 and is more preferably a transparent resin coating layer not containing pigments at all.

Upon fabrication of the resin-coated flame-retardant fiber yarn 1 of the present embodiment, a first resin solution containing a resin to form the first resin coating layer 4 is first applied to the flame-retardant fiber yarn 2, and then the excessive first resin solution is squeezed, followed by heating to form the first resin coating layer 4. Subsequently, a second resin solution containing a resin to form the second resin coating layer 5 is applied to the flame-retardant fiber yarn 2 coated with the first resin coating layer 4, and then the excessive second resin solution is squeezed, followed by heating to form the second resin coating layer 5.

In the second resin solution, the first titanium dioxide particles and the composite metal oxide particles are homogeneously dispersed together with the resin to form the second resin coating layer 5 and the second titanium dioxide particles, if used, are also homogeneously dispersed. In addition, the second resin solution may further comprise additives such as plasticizers, flame retardants, dispersants, oils and fats, stabilizers, surfactants, and pigments.

As a result, the resin-coated flame-retardant fiber yarn 1 can be obtained in which the resin coating layer 3, composed of the first resin coating layer 4 and second resin coating layer 5, is formed on the flame-retardant fiber yarn 2.

In the present embodiment, the resin-coated flame-retardant fiber woven fabric 11 can be obtained by weaving the resin-coated flame-retardant fiber yarn 1 used as the warp 1a and woof 1b using a loom such as Rapier loom as shown in FIG. 2. The resin-coated flame-retardant fiber woven fabric 11 may be that obtained by weaving a plurality of types of the flame-retardant fiber yarn 2 in combination.

The resin-coated flame-retardant fiber woven fabric 11 can attain an excellent design effect when woven using a plurality of resin-coated flame-retardant fiber yarn 2 having different color tones from each other in combination. In addition, the resin-coated flame-retardant fiber woven fabric 11 can attain a more excellent design effect when the woven fabric 11 contains a plurality of yarn having significantly different color tones from each other.

The resin-coated flame-retardant fiber woven fabric 11 has, for example, a weaving density of 25-70/25 mm for the warp and weaving density of 15-60/25 mm for the woof and preferably has a weaving density 40-60/25 mm for the warp of and weaving density of 30-45/25 mm for the woof for combination of excellent thermal insulation and a satisfactory mechanical strength. In addition, the resin-coated flame-retardant fiber woven fabric 11 preferably has, for example, a mass per unit area of 250-700 g/m².

The resin-coated flame-retardant fiber woven fabric 11 is formed by weaving the resin-coated flame-retardant fiber yarn 1 obtained by using a flame-retardant fiber yarn 2 composed of a glass fiber bundle, thereby having excellent dimensional stability. Accordingly, the resin-coated flame-retardant fiber woven fabric 11 can be used under an environment imposing prolonged exposure to heating by solar radiation and can be suitably used as various canvas materials used for blinds, tents and the like. The resin-coated flame-retardant fiber woven fabric 11 can have excellent thermal insulation as well as a quiet color tone and maintain a fine appearance thereof for a long period of time, and therefore is particularly useful for building material application such as blinds.

Examples and Comparative Examples will be described below.

### Examples

### [Example 1]

In this Example, 400 glass filaments having a diameter of 7 µm made from E-glass were bunched to prepare a glass fiber bundle having a mass of 45.0 tex as a flame-retardant fiber yarn 2 at first. The glass fiber bundle was then continuously passed through a vessel containing a first resin solution while being conveyed at a rate of 250 m/min so that the glass fiber bundle was impregnated with the first resin solution. The first resin solution had been prepared by mixing 42.3 parts by mass of vinyl chloride-vinyl acetate copolymer resin (trade name: Kanevilack L-EY, manufactured by Kaneka Corp.) in 160 parts by mass of acetone as a solvent.

Then, the glass fiber bundle impregnated with the first resin solution was passed through a die to squeeze the excessive first resin solution, followed by heating at 300°C for 3 seconds to obtain a glass fiber bundle coated with a first resin coating layer 4.

The glass fiber bundle coated with the first resin coating layer 4 was then continuously passed through a vessel containing a second resin solution while being conveyed at a rate of 250 m/min so that the glass fiber bundle coated with the first resin coating layer 4 was impregnated with the second resin solution. The second resin solution was composed of 86.70 mass% of a vinyl chloride resin composition consisting of 110 parts by mass of a vinyl chloride resin (trade name: ZEST P21, manufactured by Shin Dai-ichi Vinyl Corp.) and 100 parts by mass of additives including a plasticizer, surfactant, pigment and the like, 12.99 mass% of first titanium dioxide particles having a number average particle diameter of 1.0 µm (trade name: JR-1000, manufactured by Tayca Corp.), 0.25 mass% of bismuth-manganese composite metal oxide particles (contained in TW-149 (trade name), manufactured by Nikko Bics Co., Ltd.), and 0.06 mass% of second titanium dioxide particles having a number average particle diameter of 0.3 µm (contained in TW-149 (trade name), manufactured by Nikko Bics Co., Ltd.). Surfaces of the first titanium dioxide particles and the second titanium dioxide particles are coated with alumina.

The glass fiber bundle coated with the first resin coating layer 4 and impregnated with the second resin solution was then passed through a die to squeeze the excessive second resin solution, followed by heating so as to adjust mass thereof to 129 tex. In this way, a resin-coated glass fiber bundle was obtained in which the second resin coating layer 5 was formed on the first resin coating layer 4 as the resin-coated flame-retardant fiber yarn 1. The resin-coated glass fiber bundle obtained in this Example contains the glass fiber bundle of 34.09 mass%, first resin coating layer 4 of 0.01 mass%, and second resin coating layer 5 of 65.00 mass% based on a total mass of the resin-coated glass fiber bundle. The composition of the resin-coated glass fiber bundle obtained in this Example is shown in Tables 1 and 2.

Then, weaving performance was evaluated for the resin-coated glass fiber bundle obtained in this Example.

The weaving performance was evaluated in a manner where a case in which a frequency of yarn scission per 5 m was once or more was defined as "Poor" and a case in which the frequency was less than once was defined as "Good" in weaving of the resin-coated glass fiber bundle on a Rapier loom at a number of rotation of 200 rpm. A result is shown in Table 3.

Then, the resin-coated glass fiber bundle obtained in this Example was subjected to plain weaving as the warp 1a and woof 1b under the conditions of warp density of 42/25 mm and woof density of 42/25 mm to obtain a resin-coated glass fiber woven fabric as the resin-coated flame-retardant fiber woven fabric 11. The resin-coated glass fiber woven fabric obtained in this Example had a porosity of 11%.

Then, the second resin solution was casted on plate glass so as to form liquid film with a thickness of 0.5 mm, followed by heating the liquid film at a temperature of 180°C for 10 minutes to form a resin sheet. Subsequently, a solar reflectance and lightness L* were determined for the resin sheet. The resin sheet corresponds to the second resin coating layer 5 in the resin-coated glass fiber bundle obtained in this Example and the determined solar reflectance and lightness L* for the resin sheet are almost the same as the solar reflectance and lightness L* determined for the resin-coated glass fiber woven fabric obtained in this Example.

The solar reflectance was determined with a self-recording spectrophotometer (trade name: U-4000, manufactured by Hitachi High-Technologies Corp.) conforming to JIS R 3106. The lightness L* was determined with a color-difference meter (trade name: NR-11, manufactured by Nippon Denshoku Industries Co., Ltd.) in the L*a*b* color system. Results are shown in Table 3.

### [Example 2]

In this Example, a resin-coated glass fiber bundle was obtained as the resin-coated flame-retardant fiber yarn 2 in quite the same manner as in Example 1 except for using the second resin solution composed of 86.32 mass% of a vinyl chloride resin composition, 12.99 mass% of first titanium dioxide particles, 0.63 mass% of bismuth-manganese composite metal oxide particles (contained in TW-147 (trade name), manufactured by Nikko Bics Co., Ltd.), and 0.06 mass% of second titanium dioxide particles(contained in TW-147 (trade name), manufactured by Nikko Bics Co., Ltd.). A composition of the resin-coated glass fiber bundle obtained in this Example is shown in Tables 1 and 2.

Then, weaving performance was evaluated for the resin-coated glass fiber bundle obtained in this Example in quite the same manner as in Example 1. A result is shown in Table 3.

Then, a resin-coated glass fiber woven fabric was obtained as the resin-coated flame-retardant fiber woven fabric 11 in quite the same manner as in Example 1 except for using the resin-coated glass fiber bundle obtained in this Example. The resin-coated glass fiber woven fabric obtained in this Example had a porosity of 11%.

Then, a solar reflectance and lightness L* were determined for the resin-coated glass fiber woven fabric obtained in this Example in quite the same manner as in Example 1. Results are shown in Table 3.

### [Example 3]

In this Example, a resin-coated glass fiber bundle was obtained as the resin-coated flame-retardant fiber yarn 2 in quite the same manner as in Example 1 except for using the second resin solution composed of 85.66 mass% of a vinyl chloride resin composition, 12.99 mass% of first titanium dioxide particles, 0.63 mass% of bismuth-manganese composite metal oxide particles (contained in TW-147 (trade name), manufactured by Nikko Bics Co., Ltd.), and 0.72 mass% of second titanium dioxide particles (contained in TW-147 and 1005 (trade names), manufactured by Nikko Bics Co., Ltd.). A composition of the resin-coated glass fiber bundle obtained in this Example is shown in Tables 1 and 2.

Then, weaving performance was evaluated for the resin-coated glass fiber bundle obtained in this Example in quite the same manner as in Example 1. A result is shown in Table 3.

Then, a resin-coated glass fiber woven fabric was obtained as the resin-coated flame-retardant fiber woven fabric 11 in quite the same manner as in Example 1 except for using the resin-coated glass fiber bundle obtained in this Example. The resin-coated glass fiber woven fabric obtained in this Example had a porosity of 11%.

Then, a solar reflectance and lightness L* were determined for the resin-coated glass fiber woven fabric obtained in this Example in quite the same manner as in Example 1. Results are shown in Table 3.

### [Example 4]

In this Example, a resin-coated glass fiber bundle was obtained as the resin-coated flame-retardant fiber yarn 2 in quite the same manner as in Example 1 except for using the second resin solution composed of 83.94 mass% of a vinyl chloride resin composition, 15.75 mass% of first titanium dioxide particles, 0.25 mass% of bismuth-manganese composite metal oxide particles (contained in TW-149 (trade name), manufactured by Nikko Bics Co., Ltd.), and 0.06 mass% of second titanium dioxide particles (contained in TW-149 (trade name), manufactured by Nikko Bics Co., Ltd.). A composition of the resin-coated glass fiber bundle obtained in this Example is shown in Tables 1 and 2.

Then, weaving performance was evaluated for the resin-coated glass fiber bundle obtained in this Example in quite the same manner as in Example 1. A result is shown in Table 3.

Then, a resin-coated glass fiber woven fabric was obtained as the resin-coated flame-retardant fiber woven fabric 11 in quite the same manner as in Example 1 except for using the resin-coated glass fiber bundle obtained in this Example. The resin-coated glass fiber woven fabric obtained in this Example had a porosity of 11%.

Then, a solar reflectance and lightness L* were determined for the resin-coated glass fiber woven fabric obtained in this Example in quite the same manner as in Example 1. Results are shown in Table 3.

### [Example 5] (does not fall within the scope of the present invention)

In this Example, a resin-coated glass fiber bundle was obtained as the resin-coated flame-retardant fiber yarn 2 in quite the same manner as in Example 1 except for using the second resin solution composed of 93.79 mass% of a vinyl chloride resin composition, 5.90 mass% of first titanium dioxide particles, 0.25 mass% of bismuth-manganese composite metal oxide particles (contained in TW-149 (trade name), manufactured by Nikko Bics Co., Ltd.), and 0.06 mass% of second titanium dioxide particles (contained in TW-149 (trade name), manufactured by Nikko Bics Co., Ltd.). A composition of the resin-coated glass fiber bundle obtained in this Example is shown in Tables 1 and 2.

Then, weaving performance was evaluated for the resin-coated glass fiber bundle obtained in this Example in quite the same manner as in Example 1. A result is shown in Table 3.

Then, a resin-coated glass fiber woven fabric was obtained as the resin-coated flame-retardant fiber woven fabric 11 in quite the same manner as in Example 1 except for using the resin-coated glass fiber bundle obtained in this Example. The resin-coated glass fiber woven fabric obtained in this Example had a porosity of 11%.

Then, a solar reflectance and lightness L* were determined for the resin-coated glass fiber woven fabric obtained in this Example in quite the same manner as in Example 1. Results are shown in Table 3.

### [Comparative Example 1]

In this Comparative Example, a resin-coated glass fiber bundle was obtained as the resin-coated flame-retardant fiber yarn 2 in quite the same manner as in Example 1 except for using the second resin solution composed of 79.62 mass% of a vinyl chloride resin composition, 19.69 mass% of first titanium dioxide particles, 0.63 mass% of bismuth-manganese composite metal oxide particles (contained in TW-147 (trade name), manufactured by Nikko Bics Co., Ltd.), and 0.06 mass% of second titanium dioxide particles (contained in TW-147 (trade name), manufactured by Nikko Bics Co., Ltd.). A composition of the resin-coated glass fiber bundle obtained in this Example is shown in Tables 1 and 2.

Then, weaving performance was evaluated for the resin-coated glass fiber bundle obtained in this Example in quite the same manner as in Example 1. A result is shown in Table 3.

Then, a resin-coated glass fiber woven fabric was obtained as the resin-coated flame-retardant fiber woven fabric 11 in quite the same manner as in Example 1 except for using the resin-coated glass fiber bundle obtained in this Comparative Example. The resin-coated glass fiber woven fabric obtained in this Comparative Example had a porosity of 11%.

Then, a solar reflectance and lightness L* were determined for the resin-coated glass fiber woven fabric obtained in this Comparative Example in quite the same manner as in Example 1. Results are shown in Table 3.

### [Comparative Example 2]

In this Comparative Example, a resin-coated glass fiber bundle was obtained as the resin-coated flame-retardant fiber yarn 2 in quite the same manner as in Example 1 except for using the second resin solution composed of 86.8 mass% of a vinyl chloride resin composition, 1.97 mass% of first titanium dioxide particles, 0.25 mass% of bismuth-manganese composite metal oxide particles (contained in TW-149 (trade name), manufactured by Nikko Bics Co., Ltd.), and 0.06 mass% of second titanium dioxide particles (contained in TW-149 (trade name), manufactured by Nikko Bics Co., Ltd.). A composition of the resin-coated glass fiber bundle obtained in this Comparative Example is shown in Tables 1 and 2.

Then, weaving performance was evaluated for the resin-coated glass fiber bundle obtained in this Comparative Example in quite the same manner as in Example 1. A result is shown in Table 3.

Then, a resin-coated glass fiber woven fabric was obtained as the resin-coated flame-retardant fiber woven fabric 11 in quite the same manner as in Example 1 except for using the resin-coated glass fiber bundle obtained in this Comparative Example. The resin-coated glass fiber woven fabric obtained in this Comparative Example had a porosity of 11%.

Then, a solar reflectance and lightness L* were determined for the resin-coated glass fiber woven fabric obtained in this Comparative Example in quite the same manner as in Example 1. Results are shown in Table 3.

### [Comparative Example 3]

In this Comparative Example, a resin-coated glass fiber bundle was obtained as the resin-coated flame-retardant fiber yarn 2 in quite the same manner as in Example 1 except for using the second resin solution composed of 97.34 mass% of a vinyl chloride resin composition, 1.97 mass% of first titanium dioxide particles, 0.63 mass% of bismuth-manganese composite metal oxide particles (contained in TW-147 (trade name), manufactured by Nikko Bics Co., Ltd.), and 0.06 mass% of second titanium dioxide particles (contained in TW-147 (trade name), manufactured by Nikko Bics Co., Ltd.). A composition of the resin-coated glass fiber bundle obtained in this Comparative Example is shown in Tables 1 and 2.

Then, weaving performance was evaluated for the resin-coated glass fiber bundle obtained in this Comparative Example in quite the same manner as in Example 1. A result is shown in Table 3.

Then, a resin-coated glass fiber woven fabric was obtained as the resin-coated flame-retardant fiber woven fabric 11 in quite the same manner as in Example 1 except for using the resin-coated glass fiber bundle obtained in this Comparative Example. The resin-coated glass fiber woven fabric obtained in this Comparative Example had a porosity of 11%.

Then, a solar reflectance and lightness L* were determined for the resin-coated glass fiber woven fabric obtained in this Comparative Example in quite the same manner as in Example 1. Results are shown in Table 3.

### [Comparative Example 4]

In this Comparative Example, a resin-coated glass fiber bundle was obtained as the resin-coated flame-retardant fiber yarn 2 in quite the same manner as in Example 1 except for using the second resin solution composed of 81.97 mass% of a vinyl chloride resin composition, 17.72 mass% of first titanium dioxide particles, 0.25 mass% of bismuth-manganese composite metal oxide particles (contained in TW-149 (trade name), manufactured by Nikko Bics Co., Ltd.), and 0.06 mass% of second titanium dioxide particles (contained in TW-149 (trade name), manufactured by Nikko Bics Co., Ltd.). A composition of the resin-coated glass fiber bundle obtained in this Comparative Example is shown in Tables 1 and 2.

Then, weaving performance was evaluated for the resin-coated glass fiber bundle obtained in this Comparative Example in quite the same manner as in Example 1. A result is shown in Table 3.

Then, a resin-coated glass fiber woven fabric was obtained as the resin-coated flame-retardant fiber woven fabric 11 in quite the same manner as in Example 1 except for using the resin-coated glass fiber bundle obtained in this Comparative Example. The resin-coated glass fiber woven fabric obtained in this Comparative Example had a porosity of 11%.

Then, a solar reflectance and lightness L* were determined for the resin-coated glass fiber woven fabric obtained in this Comparative Example in quite the same manner as in Example 1. Results are shown in Table 3.

### [Comparative Example 5]

In this Comparative Example, a resin-coated glass fiber bundle was obtained as the resin-coated flame-retardant fiber yarn 2 in quite the same manner as in Example 1 except for using the second resin solution composed of 86.70 mass% of a vinyl chloride resin composition, 12.99 mass% of first titanium dioxide particles, 0.25 mass% of carbon black (contained in 1075 (trade name), manufactured by Nikko Bics Co., Ltd.), and 0.06 mass% of second titanium dioxide particles (contained in 1005 (trade name), manufactured by Nikko Bics Co., Ltd.). A composition of the resin-coated glass fiber bundle obtained in this Comparative Example is shown in Tables 1 and 2.

Then, weaving performance was evaluated for the resin-coated glass fiber bundle obtained in this Comparative Example in quite the same manner as in Example 1. A result is shown in Table 3.

Then, a resin-coated glass fiber woven fabric was obtained as the resin-coated flame-retardant fiber woven fabric 11 in quite the same manner as in Example 1 except for using the resin-coated glass fiber bundle obtained in this Comparative Example. The resin-coated glass fiber woven fabric obtained in this Comparative Example had a porosity of 11%.

Then, a solar reflectance and lightness L* were determined for the resin-coated glass fiber woven fabric obtained in this Comparative Example in quite the same manner as in Example 1. Results are shown in Table 3.

### [Comparative Example 6]

In this Comparative Example, a resin-coated glass fiber bundle was obtained as the resin-coated flame-retardant fiber yarn 2 in quite the same manner as in Example 1 except for using the second resin solution composed of 99.94 mass% of a vinyl chloride resin composition and 0.06 mass% of bismuth-manganese composite metal oxide particles (contained in TW-147 (trade name), manufactured by Nikko Bics Co., Ltd.) and not containing the first titanium dioxide particles and second titanium dioxide particles at all. A composition of the resin-coated glass fiber bundle obtained in this Comparative Example is shown in Tables 1 and 2.

Then, weaving performance was evaluated for the resin-coated glass fiber bundle obtained in this Comparative Example in quite the same manner as in Example 1. A result is shown in Table 3.

Then, a resin-coated glass fiber woven fabric was obtained as the resin-coated flame-retardant fiber woven fabric 11 in quite the same manner as in Example 1 except for using the resin-coated glass fiber bundle obtained in this Comparative Example. The resin-coated glass fiber woven fabric obtained in this Comparative Example had a porosity of 11%.

Then, a solar reflectance and lightness L* were determined for the resin-coated glass fiber woven fabric obtained in this Comparative Example in quite the same manner as in Example 1. Results are shown in Table 3.

**[Table 1]**

| | Composition of resin-coated glass fiber bundle (mass%) | | | | | |
|---|---|---|---|---|---|---|
| | Glass fiber bundle | First resin coating layer | Second resin coating layer | | | |
| | | | Resin (solid content) | A | B | c |
| Example 1 | 34.90 | 0.10 | 56.36 | 8.44 | 0.16 | 0.04 |
| Example 2 | 34.90 | 0.10 | 56.11 | 8.44 | 0.41 | 0.04 |
| Example 3 | 34.90 | 0.10 | 55.68 | 8.44 | 0.41 | 0.47 |
| Example 4 | 34.90 | 0.10 | 54.56 | 10.24 | 0.16 | 0.04 |
| Example 5^{(x)} | 34.90 | 0.10 | 60.96 | 3.84 | 0.16 | 0.04 |
| Comparative Example 1 | 34.90 | 0.10 | 51.75 | 12.80 | 0.41 | 0.04 |
| Comparative Example 2 | 34.90 | 0.10 | 63.52 | 1.28 | 0.16 | 0.04 |
| Comparative Example 3 | 34.90 | 0.10 | 63.27 | 1.28 | 0.41 | 0.04 |
| Comparative Example 4 | 34.90 | 0.10 | 53.28 | 11.52 | 0.16 | 0.04 |
| Comparative Example 5 | 34.90 | 0.10 | 56.36 | 8.44 | 0.16* | 0.04 |
| Comparative Example 6 | 34.90 | 0.10 | 64.96 | 0 | 0.04 | 0 |

| | | | | | | |
|---|---|---|---|---|---|---|
| Resin (solid content): Solid content of vinyl chloride resin composition A: First titanium dioxide particles B: Bismuth-manganese composite metal oxide particles C: Second titanium dioxide particles *: Carbon black ^{(x)} does not fall within the scope of the present invention | | | | | | |

**[Table 2]**

| | A+B | A+B+C | A/B | B/C |
|---|---|---|---|---|
| Example 1 | 8.60 | 8.64 | 53.8 | 4.00 |
| Example 2 | 8.85 | 8.89 | 20.6 | 10.25 |
| Example 3 | 8.85 | 9.32 | 20.6 | 0.87 |
| Example 4 | 10.4 | 10.44 | 64.0 | 4.00 |
| Example 5^{(x)} | 4.00 | 4.04 | 24.0 | 4.00 |
| Comparative Example 1 | 13.21 | 13.25 | 31.22 | 10.24 |
| Comparative Example 2 | 1.44 | 1.48 | 8.00 | 4.00 |
| Comparative Example 3 | 1.69 | 1.73 | 3.12 | 4.00 |
| Comparative Example 4 | 11.68 | 11.72 | 72.0 | 4.00 |
| Comparative Example 5 | 8.60 | 8.64 | 53.8 | 4.00 |
| Comparative Example 6 | 0.04 | 0.04 | - | - |

| | | | | |
|---|---|---|---|---|
| A: First titanium dioxide particles B: Bismuth-manganese composite metal oxide particles C: Second titanium dioxide particles ^{(x)} does not fall within the scope of the present invention | | | | |

**[Table 3]**

| | Resin-coated glass fiber bundle | Resin-coated glass woven fabric | |
|---|---|---|---|
| | Weaving performance | Solar reflectance (%) | Lightness L* |
| Example 1 | Good | 57.6 | 71.8 |
| Example 2 | Good | 61.7 | 69.6 |
| Example 3 | Good | 57.8 | 72.2 |
| Example 4 | Good | 63.3 | 72.9 |
| Example 5 ^{(x)} | Good | 50.6 | 60.1 |
| Comparative Example 1 | Poor | 60.7 | 73.0 |
| Comparative Example 2 | Good | 46.2 | 53.3 |
| Comparative Example 3 | Good | 39.5 | 48.7 |
| Comparative Example 4 | Good | 64.5 | 75.2 |
| Comparative Example 5 | Good | 37.1 | 52.3 |
| Comparative Example 6 | Good | 31.6 | 64.1 |

| | | | |
|---|---|---|---|
| ^{(x)} does not fall within the scope of the present invention | | | |

It is apparent from the results shown in Tables 1-3 that the resin-coated glass fiber bundles of Examples 1-4, in which each total content of the first titanium dioxide particles (A) and bismuth-manganese composite metal oxide particles (B), (A+B), contained in the second resin coating layer 5 is in a range of 1.5-13.0 mass% based on the total mass of the resin-coated glass fiber bundle and each mass ratio value of the first titanium dioxide particles to bismuth-manganese composite metal oxide particles (A/B) is in a range of 5-70 have excellent weaving performance.

It is apparent that the resin-coated glass fiber bundle of Comparative Example 1, in which the total content of the first titanium dioxide particles (A) and bismuth-manganese composite metal oxide particles (B), (A+B), contained in the second resin coating layer 5 is 13.21 mass%, which exceeds 13.0 mass%, has, compared with the resin-coated glass fiber bundles of Examples 1-4, difficulty in weaving.

It is also apparent that the resin-coated glass fiber woven fabrics obtained by weaving the resin-coated glass fiber bundles of Examples 1-4, respectively, have excellent thermal insulation as indicated by solar reflectance thereof in a range of 50% or more as well as moderately dark and quiet color tones as blinds as indicated by lightness L* thereof in a range of 50-75.

It is apparent that the resin-coated glass fiber woven fabric obtained by weaving the resin-coated glass fiber bundle of Comparative Example 2, in which the total content of the first titanium dioxide particles (A) and bismuth-manganese composite metal oxide particles (B), (A+B), contained in the second resin coating layer 5 is 1.44 mass%, which is below 1.5 mass%, cannot obtain sufficient thermal insulation as indicated by a solar reflectance thereof below 50% comparing with the resin-coated glass fiber woven fabrics obtained by weaving the resin-coated glass fiber bundles of Examples 1-4, respectively.

It is also apparent that the resin-coated glass fiber woven fabric obtained by weaving the resin-coated glass fiber bundle of Comparative Example 3, in which the mass ratio value of the first titanium dioxide particles to the bismuth-manganese composite metal oxide particles (A/B) is 3.12, which is below 5, cannot obtain sufficient thermal insulation as indicated by a solar reflectance thereof below 50% and has an excessively dark color tone as blinds as indicated by a lightness L* thereof below 50 comparing with the resin-coated glass fiber woven fabrics obtained by weaving the resin-coated glass fiber bundles of Examples 1-4, respectively.

It is also apparent that the resin-coated glass fiber woven fabric obtained by weaving the resin-coated glass fiber bundle of Comparative Example 4, in which the mass ratio value of the first titanium dioxide particles to the bismuth-manganese composite metal oxide particles (A/B) is 72, which exceeds 70, has an excessively bright color tone as blinds as indicated by a lightness L* thereof exceeding 75 comparing with the resin-coated glass fiber woven fabrics obtained by weaving the resin-coated glass fiber bundles of Examples 1-4, respectively.

It is also apparent that the resin-coated glass fiber woven fabric obtained by weaving the resin-coated glass fiber bundle of Comparative Example 5, which comprises carbon black instead of the bismuth-manganese composite metal oxide particles in the second resin coating layer 5, cannot obtain sufficient thermal insulation as indicated by a solar reflectance thereof below 50% comparing with the resin-coated glass fiber woven fabrics obtained by weaving the resin-coated glass fiber bundles of Examples 1-4, respectively.

It is also apparent that the resin-coated glass fiber woven fabric obtained by weaving the resin-coated glass fiber bundle of Comparative Example 6, which does not comprise the first and second titanium dioxide particles and comprises the bismuth-manganese composite metal oxide particles only in the second resin coating layer 5, cannot obtain sufficient thermal insulation as indicated by a solar reflectance thereof below 50% comparing with the resin-coated glass fiber woven fabrics obtained by weaving the resin-coated glass fiber bundles of Examples 1-4, respectively.

### Reference Signs List

1 ... Resin-coated flame-retardant fiber yarn, 2 ... Flame-retardant fiber yarn, 3 ... Resin coating layer, 4 ... First resin coating layer, 5 ... Second resin coating layer, 11 ... Resin-coated flame-retardant fiber woven fabric.

## Claims

1. A resin-coated flame-retardant fiber yarn comprising a resin coating layer coating a flame-retardant fiber yarn,
wherein the resin coating layer comprises first titanium dioxide particles (A) having a number average particle diameter in a range of 0.6 to 1.5 µm, second titanium dioxide particles (C) having a number average particle diameter in a range of 0.2 to 0.4 µm, and bismuth-manganese composite metal oxide particles (B),
wherein a total content of the first titanium dioxide particles and the bismuth-manganese composite metal oxide particles (A+B) is in a range of 1.5 to 13.0 mass% based on a total mass of the resin-coated flame-retardant fiber yarn, and
wherein a mass ratio value of the first titanium dioxide particles to the bismuth-manganese composite metal oxide particles (A/B) is in a range of 5 to 70, and
wherein a total content of the first titanium dioxide particles, the bismuth-manganese composite metal oxide particles and the second titanium dioxide particles (A+B+C) is in a range of 4.5 to 13.2 mass% based on the total mass of the resin-coated flame-retardant fiber yarn.

2. The resin-coated flame-retardant fiber yarn according to claim 1, wherein the total content of the first titanium dioxide particles and the bismuth-manganese composite metal oxide particles (A+B) is in a range of 4.5 to 13.0 mass% based on the total mass of the resin-coated flame-retardant fiber yarn.

3. The resin-coated flame-retardant fiber yarn according to claim 1 or 2,
wherein the mass ratio value of the first titanium dioxide particles to the bismuth-manganese composite metal oxide particles (A/B) is in a range of 15 to 55.

4. The resin-coated flame-retardant fiber yarn according toany one of claims 1 to 3, wherein a mass ratio value of the bismuth-manganese composite metal oxide particles to the second titanium dioxide particles (B/C) is in a range of 1 to 20.

5. A resin-coated flame-retardant fiber woven fabric formed by weaving resin-coated flame-retardant fiber yarns according to any one of claims 1 to 4 used as at least a part of warps or woofs.

## Patentansprüche

1. Harzbeschichtetes flammenhemmendes Fasergarn, umfassend eine Harzbeschichtungsschicht, die ein flammenhemmendes Fasergarn beschichtet,
wobei die Harzbeschichtungsschicht erste Titandioxidpartikel (A) mit einem anzahlgemittelten Partikeldurchmesser in einem Bereich von 0,6 bis 1,5 µm, zweite Titandioxidpartikel (C) mit einem anzahlgemittelten Partikeldurchmesser in einem Bereich von 0,2 bis 0,4 µm und Bismut-Mangan-Verbundmetalloxidpartikel (B) umfasst,
wobei ein Gesamtgehalt der ersten Titandioxidpartikel und der Bismut-Mangan-Verbundmetalloxidpartikel (A+B) in einem Bereich von 1,5 bis 13,0 Massenprozent, bezogen auf eine Gesamtmasse des harzbeschichteten flammenhemmenden Fasergarns, liegt, und
wobei ein Wert des Massenverhältnisses der ersten Titandioxidpartikel zu den Bismut-Mangan-Kompositmetalloxidpartikeln (A/B) in einem Bereich von 5 bis 70 liegt, und
wobei ein Gesamtgehalt der ersten Titandioxidpartikel, der Bismut-Mangan-Kompositmetalloxidpartikel und der zweiten Titandioxidpartikel (A+B+C) in einem Bereich von 4,5 bis 13,2 Massenprozent, bezogen auf die Gesamtmasse des harzbeschichteten flammenhemmenden Fasergarns, liegt.

2. Harzbeschichtetes flammenhemmendes Fasergarn gemäß Anspruch 1, wobei der Gesamtgehalt der ersten Titandioxidpartikel und der Bismut-Mangan-Kompositmetalloxidpartikel (A+B) in einem Bereich von 4,5 bis 13,0 Massenprozent, bezogen auf die Gesamtmasse des harzbeschichteten flammenhemmenden Fasergarns, liegt.

3. Harzbeschichtetes flammenhemmendes Fasergarn gemäß Anspruch 1 oder Anspruch 2,
wobei der Wert des Massenverhältnisses der ersten Titandioxidpartikel zu den Bismut-Mangan-Kompositmetalloxidpartikeln (A/B) in einem Bereich von 15 bis 55 liegt.

4. Harzbeschichtetes flammenhemmendes Fasergarn gemäß einem der Ansprüche 1 bis 3,
wobei ein Wert des Massenverhältnisses der Bismut-Mangan-Verbundmetalloxidpartikel zu den zweiten Titandioxidpartikeln (B/C) in einem Bereich von 1 bis 20 liegt.

5. Harzbeschichtete flammenhemmende Fasern umfassendes Gewebe, das durch Weben von harzbeschichteten flammenhemmenden Fasergarnen gemäß einem der Ansprüche 1 bis 4, die als mindestens ein Teil der Kettfäden oder Schussfäden verwendet werden, gebildet ist.

## Revendications

1. Fil de fibres retardateur de flamme enduit de résine comprenant une couche de revêtement de résine enrobant un fil de fibres retardateur de flamme,
dans lequel la couche de revêtement de résine comprend des premières particules de dioxyde de titane (A) possédant un diamètre de particule moyen en nombre dans une plage comprise entre 0,6 et 1,5 µm, des secondes particules de dioxyde de titane (C) possédant un diamètre de particule moyen en nombre dans une plage comprise entre 0,2 et 0,4 µm, et des particules d'oxyde de métal composite de bismuth-manganèse (B),
dans lequel une teneur totale en première particules de dioxyde de titane et en particules d'oxyde de métal composite de bismuth-manganèse (A+B) est comprise dans la plage allant de 1,5 à 13,0 % en masse sur la base de la masse totale du fil de fibres retardateur de flamme enduit de résine, et
dans lequel une valeur de rapport de masse des premières particules de dioxyde de titane aux particules d'oxyde de métal composite de bismuth-manganèse (A/B) est comprise dans la plage allant de 5 à 70, et
dans lequel une teneur totale des premières particules d'oxyde de titane, des particules d'oxyde de métal composite de bismuth-manganèse et des secondes particules d'oxyde de titane (A+B+C) est comprise dans la plage allant de 4,5 à 13,2 % en masse sur la base de la masse totale du fil de fibres retardateur de flamme enduit de résine.

2. Fil de fibres retardateur de flamme enduit de résine selon la revendication 1, dans lequel la teneur totale des premières particules de dioxyde de titane et des particules d'oxyde de métal composite de bismuth-manganèse (A+B) est comprise dans la plage allant de 4,5 à 13,0 % en masse sur la base de la masse totale du fil de fibres retardateur de flamme enduit de résine.

3. Fil de fibres retardateur de flamme enduit de résine selon la revendication 1 ou la revendication 2, dans lequel la valeur de rapport de masse des premières particules de dioxyde de titane aux particules d'oxyde de métal composite de bismuth-manganèse (A/B) est comprise dans la plage allant de 15 à 55.

4. Fil de fibres retardateur de flamme enduit de résine selon l'une quelconque des revendications 1 à 3, dans lequel une valeur de rapport de masse des particules d'oxyde de métal composite de bismuth-manganèse aux secondes particules de dioxyde de titane (B/C) est comprise dans la plage allant de 1 à 20.

5. Tissu tissé de fibres retardateurs de flamme enduit de résine, formé par le tissage des fils de fibres retardateurs de flamme enduits de résine selon l'une quelconque des revendications 1 à 4, utilisé en tant qu'au moins une partie de chaînes ou de trames.
